# EUROPEAN PATENT APPLICATION

(11) **EP 2 213 981 A2**
(43) Date of publication of application: **04.08.2010**
(21) Application number: 10250099.8
(22) Date of filing: 22.01.2010
(51) Int. Cl.: G01C 21/32

(54) **Method and system for managing relationships between location identifiers**

(30) Priority: 30.01.2009 US 362751
(71) Applicant: Navteq North America, LLC, Chicago, Illinois 60606 (US)
(72) Inventor: Samsalovic, Vojislav, Chicago, Il 60618 (US); Synghal, Tajiv K., Concord, CA 94518 (US); Kurspahic, Tarik, Washington, DC 20002 (US)
(74) Representative: Palmer, Jonathan R.

(57) **Abstract**

A method and system for managing relationships between location identifiers is disclosed. A relationship includes an originating identifier and a target identifier. A unique relationship is defined by the location codes and relationship types associated with the originating and target identifier. A synonym service, a translation service, and a validation service analyze a new or modified relationship prior to storing the relationship in a relationship store. A graph service, a statistics service, and a reporting service analyze the relationships stored in the relationship store.

## Description

### REFERENCE TO RELATED APPLICATIONS

The present patent application is related to the copending patent applications filed on the same date, Ser. No. 12/362,734, entitled "METHOD AND SYSTEM FOR ASSESSING QUALITY OF LOCATION CONTENT"; Ser. No. 12/362,767, entitled "METHOD AND SYSTEM FOR REFRESHING LOCATION CODE DATA"; Ser. No. 12/362,786, entitled "METHOD FOR REPRESENTING LINEAR FEATURES IN A LOCATION CONTENT MANAGEMENT SYSTEM"; and Ser. No. 12/362,807, entitled "METHOD AND SYSTEM FOR EXCHANGING LOCATION CONTENT DATA IN DIFFERENT DATA FORMATS."

### FIELD

The present invention relates generally to location-based systems, and more particularly, relates to a method and system for managing relationships between location identifiers associated with related locations.

### BACKGROUND

Various technologies have been developed that provide navigation-related and map-related services. For example, vehicle navigation systems can determine where a vehicle is located and provide directions to travel to a desired destination. Also, Internet sites are available that provide maps, directions for traveling to a desired destination from a specified starting point, and other map-related services. Further, hand-held devices are available that can determine one's position and provide a map of one's surroundings.

In order to provide these and other map-related functions and features, navigation systems use geographic data. The geographic data may be in the form of one or more geographic databases that include data representing physical features in the geographic region. The geographic database includes information about the represented geographic features, such as one-way streets, position of the roads, speed limits along portions of roads, address ranges along the road portions, turn restrictions at road intersections, direction restrictions, such as one-way streets, and so on. Additionally, the geographic data may include data associated with points of interest, such as restaurants, hotels, airports, gas stations, stadiums, police stations, and so on.

This geographic data may be stored in a geographic database, such as a geographic database published by NAVTEQ North America, LLC of Chicago, Illinois.
In addition to the data obtained by a map vendor, content sources have data regarding locations in a geographic area. The content sources may provide their data to the map vendor for inclusion into the geographic database. For example, an owner of a chain restaurant may provide the map vendor with a current list of all their locations and for each of the locations the list may include address, telephone numbers, hours of operation, menu, web page address, and other information about the location.

As the amount of information stored in a geographic database increases, it becomes more difficult for the map vendor to add the third party data to the geographic database. As a result, location content management systems have been developed to allow multiple parties to provide data related to a location, which is sometimes referred to as "location content" or simply "content." The location content management system provides a link between the location content and the geographic location associated with the content. The link is a location code that the location management system assigns to a location.

A location code may be assigned to any location where a person can travel. For example, a person may want to travel to a particular office on a particular floor in a particular building in a geographic region. Using this example, the location content management system assigns a location code to each of the office, floor, and building. The location content management system may also assign a location code to stairs and/or an elevator if the floor is not on the ground level of the building. By assigning location codes in this manner, a navigation system can provide route guidance to a user for traveling to the office within the building.

While the location content management system provides a way for multiple parties to provide content regarding a location, there continues to be room for new features and improvements in the location content management system. One area for improvement is managing the relationship between the location codes assigned by the location content management system. By managing the relationships between the location codes, the location content management system provides a common way to organize and link locations.

### SUMMARY

A method and system for managing relationships between location identifiers is disclosed. The location identifier relationship system includes a relationship store for storing data regarding a relationship between two location identifiers - the originating identifier and the target identifier. The data includes a location code and a relationship type for each of the two location identifiers. The data also includes a relationship direction, which may be unidirectional or bi-directional.

The location identifier relationship system also includes a synonym service, a translation service, and a validation service that analyze new or modified relationships prior to the relationship being stored in the relationship store. The location identifier relationship system also includes a graph service, a statistics service, and a reporting service that analyze relationships stored in the relationship store. The graph service provides graphs that depict either a vertical or a horizontal representation of a network of relationships. The statistics service collects statistics regarding activities related to creating, modifying, and downloading relationship data. The reporting service creates reports and notifications based on the statistics collected by the statistics service.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Figure 1 is a block diagram of a location identifier relationship system, according to an example;
Figure 2 is a block diagram of a relationship record, according to an example;
Figure 3 is a block diagram of a synonym service record, according to an example;
Figure 4 is a block diagram of a translation service record, according to an example;
Figure 5 is a vertical hierarchy graph, according to an example;
Figure 6 is a horizontal hierarchy graph, according to an example; and
Figure 7 is a radar chart generated by a reporting service, according to an example.

### DETAILED DESCRIPTION

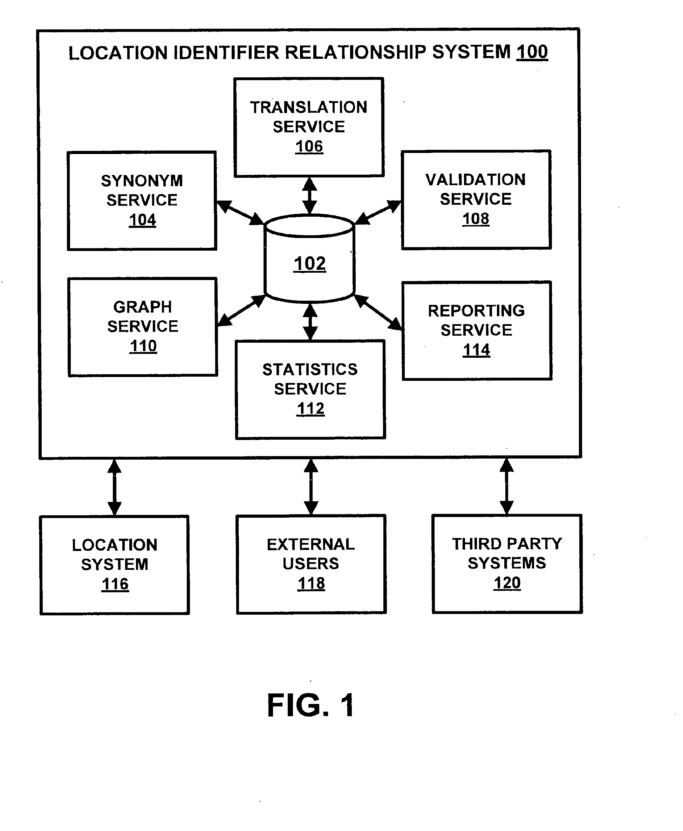

Figure 1 is a block diagram of a location identifier relationship system 100 (referred to herein as the relationship system 100). The relationship system 100 includes a relationship store 102, a synonym service 104, a translation service 106, a validation service 108, a graph service 110, a statistics service 112, and a reporting service 114.
The relationship system 100 may include other entities as well, such as a processor and memory for storing operating instructions for the processor. The relationship system 100 may also include communication services that allows the relationship system 100 communicate with a location system 116, external users 118, third party systems 120, and other entities.

The relationship system 100 associates two or more location identifiers based on location, shape, or other characteristic. An association between two location identifiers is referred to as a relationship. The two location identifiers in the relationship are referred to as the originating identifier and the target identifier.

The originating and target identifiers each have a location code assigned to them.
The location system 116 assigns the location code to the originating and target identifiers. The location system 116 may assign location codes in random order, in numerical order, or in any other manner. The location code may be a numerical value. For example, the location code may be a 16-bit number, a 32-bit number, a 64-bit number, and so on. Alternatively, the location code may include a combination of numbers, letters, and/or characters.

The relationship between two location identifiers is formed when a relationship type is established between the originating identifier and the target identifier. The relationship type may be specified by using two data elements, originating type and target type. Alternatively, the relationship type may be specified using a single data entity that includes both the originating and target types.

The relationship system 100 may include a list of predefined relationship types.
Users of the relationship system 100 that create relationships may use this predefined list to create uniform relationships. In one embodiment, the users are required to use the predefined relationship types to prevent the creation of undesirable relationships.

The relationship also includes a direction. The direction may be bidirectional, i.e., in both directions between the originating identifier and the target identifier. The direction may also be unidirectional. In the unidirectional example, the direction is either from the originating identifier to the target identifier or from the target identifier to the originating identifier.

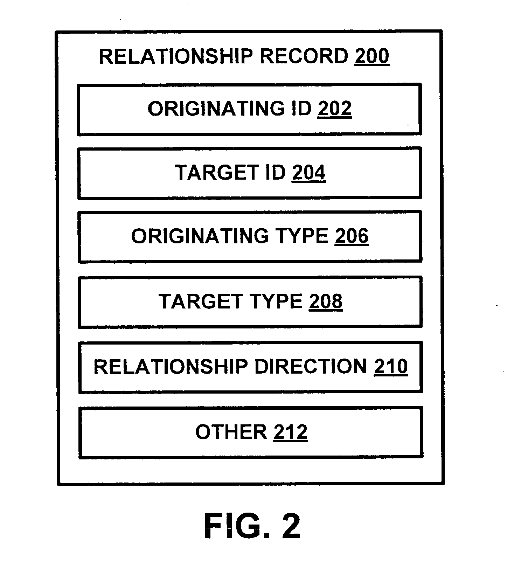

The relationship store 102 includes data defining the relationship. Figure 2 is a block diagram of an example relationship record 200. The relationship record 200 includes data defining a single relationship. The relationship store 102 includes a relationship record 200 for each relationship.

The data attributes depicted in Figure 2 include originating identification 202, target identification 204, originating type 206, target type 208, and relationship direction 210. The attributes 202-208 define a unique relationship.

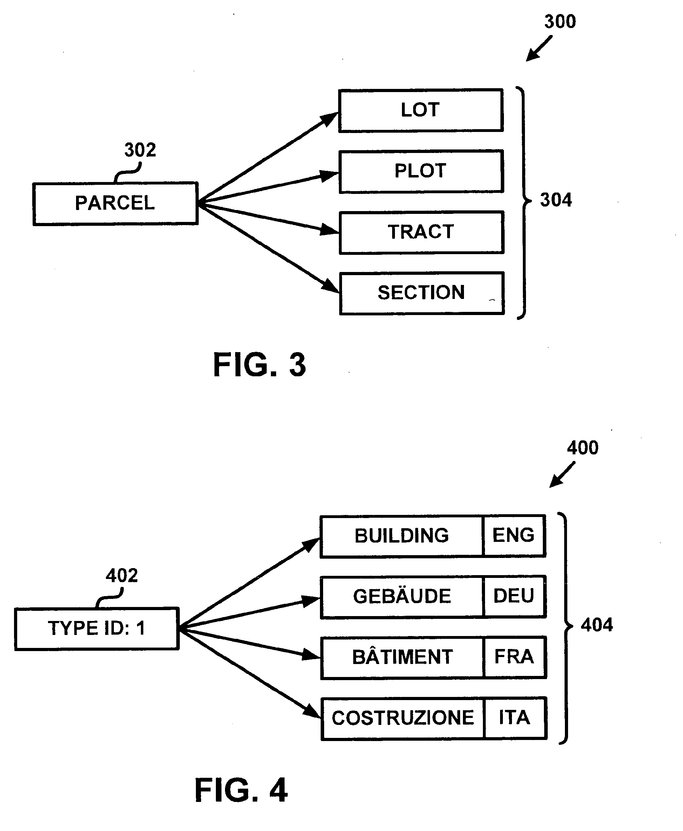

As this is not an exhaustive list of all the data attributes for the relationship record 200, Figure 2 also depicts other attributes 212. For example, the record 200 may also include a language code as described with respect to Figure 4, relationship status (e.g., active, pending review, depreciated, blocked), time and date of when the relationship was created and/or modified, time and date of when the relationship is valid, purpose of the relationship (e.g., navigation), identity of the relationship creator, metadata used for semantic searches, and so on.

As another example, the record 200 may include attributes associated with special relationships. One example of a special relationship is a containment relationship. The containment relationship identifies a grouping of relationships that function together (i.e., attributes filter down). For example, if a building is destroyed and the relationship PARCEL-BUILDING is deleted from the relationship system 100, all of the other relationships created for locations within the building (e.g., BUILDING-FLOOR, FLOOR-SUITE) are also deleted from the relationship system 100.

The originating identification attribute 202 includes the location code that the location system 116 assigned to the originating identifier. The target identification attribute 204 includes the location code that the location system 116 assigned to the target identifier.

The originating type attribute 206 includes data identifying the type of the originating identifier. The target type attribute 208 includes data identifying the type of the target identifier. The type may be any location category relating to a structure, such as parcel, building, floor, suite, escalator, and so on. Additionally, the type may be any location category relating to an outdoor location, such as lake, park, trail, tree, bench, and so on. The type may also be any other location category that may be useful for identifying a relationship. For example, the generic categories of parent, child, and sibling may be used.

The relationship direction attribute 210 includes data indicating whether the relationship direction is bidirectional or unidirectional. In addition, if the relationship direction is unidirectional, the relationship direction attribute 210 includes data indication whether the direction is from the originating identifier to the target identifier or from the target identifier to the originating identifier.

The synonym service 104 resolves synonym words into preferred relationship types. Figure 3 is a block diagram of a synonym service record 300. The record 300 includes the preferred type 302 and a list of synonyms 304. In this example, the preferred type is "PARCEL." The synonym service 104 recognizes that LOT, PLOT, TRACT, and SECTION are synonyms of PARCEL. Using this example, when a user of the relationship system 100 enters LOT as the originating or target type, the synonym service 104 stores data associated with PARCEL in the relationship store 102. As another example, the synonym service 104 may store data associated with TRAIL if the user enters PATH into the relationship system 100. In this way, the synonym service 104 prevents or reduces redundant relationship types.

The translation service 106 assigns a language code to each relationship type. Figure 4 is a block diagram of a translation service record 400. The record 400 includes a language code 402 assigned to a relationship type 404. The relationship type 404 is translated into a plurality of languages. In this example, the language code 1 is assigned to the relationship type "BUILDING." The relationship type 404 has been translated into English, German, French, and Italian. Of course, the translation service 106 may translate a relationship type into a variety of languages, both shown and not shown in Figure 4.

The validation service 108 uses validation rules to validate relationships prior to storage in the relationship store 102. The validation rules use information about originating and target identifiers and the relationship type to determine whether a particular relationship can be created. For example, a validation rule might specify that a location code that references a floor in a building cannot participate in BUILDING-SUITE relationship. Furthermore, the validation service 108 may check whether location codes participating in a relationship exist and whether corresponding location entities are in one of valid states. The validation service 108 also validates that users have sufficient privileges to create, modify, and/or delete relationships. The validation service 108 may also automatically change/update other relationships affected by relationship data provided by an end user for another relationship.

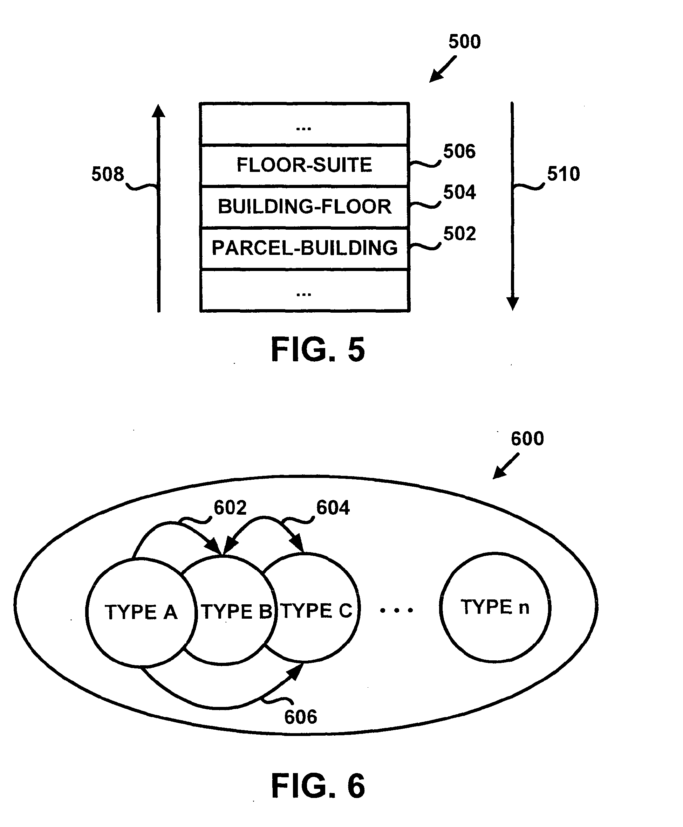

The relationship system 100 also creates networks or hierarchies of relationships. Two or more relationships that form a logical hierarchy are modeled using relationship graphs. The graph service 110 generates a relationship graph based on a common location code and relationship type between one of the identifiers of one relationship and an identifier of another relationship. The graph service 110 generates both vertical and horizontal relationship graphs. An example vertical graph is depicted in Figure 5, while an example horizontal graph is depicted in Figure 6.

Figure 5 depicts a vertical graph 500. Preferably, the graph 500 is used as a predefined template for indoor mapping. In this example, the relationship 502 is defined by an originating type of "PARCEL" and a target type of "BUILDING"; the relationship 504 is defined by an originating type of "BUILDING" and a target type of "FLOOR"; and the relationship 506 is defined by an originating type of "FLOOR" and a target type of "SUITE." The relationship direction is bidirectional as indicated by the arrows 508, 510.

A navigation system may use data in the graph 500 to provide navigation guidance to an end-user wanting to travel to the suite identified by a location code associated with the target identifier of the relationship 506. In this example, the navigation system uses data in a geographic database or obtained from a location content management system to guide the end-user to the building. The navigation system then uses the floor location code to provide guidance to the desired floor in the building. Thereafter, the navigation system uses the suite location code to provide guidance to the suite.

Figure 6 depicts a horizontal graph 600. The graph 600 shows how the graph service 110 can connect relationship types into a logical structure. In this example, the graph service 110 defines traversal rules 602-606. The first traversal rule 602 is that type A is connected to type B, and type A can traverse to type B, but type B cannot traverse to type A. The second traversal rule 604 is that type B is connected to type C, and type B can traverse to type C and type C can traverse to type B. The third traversal rule 606 is that type A is not connected to type C, and type B has to be between type A and C or the hierarchy is broken.

The horizontal graph 600 may be useful for modeling multimodal transportation.
For example, an airport with its complex layout that starts with an entrance to a terminal and then follows with a check-in location, security checkpoint, escalator, and finally ends with a gate may be modeled using a horizontal graph. Locations following the entrance are not connected with a road or other type of network, but can be logically modeled through a relationship model. This relationship model can contain information that indicates modes of transportation available between different location codes.

The statistics service 112 collects statistics regarding activities related to creating, modifying, and downloading relationship data. The statistics service 112 may store the collected data in the relationship store 102 or another memory device. The statistics may include a count of relationships added to the relationship store 102, relationships of a particular type, modifications to a relationship, relationship hierarchies, and so on. The statistics may also include percentages, standard deviations, predictions, and other numerical analysis of the relationship data.

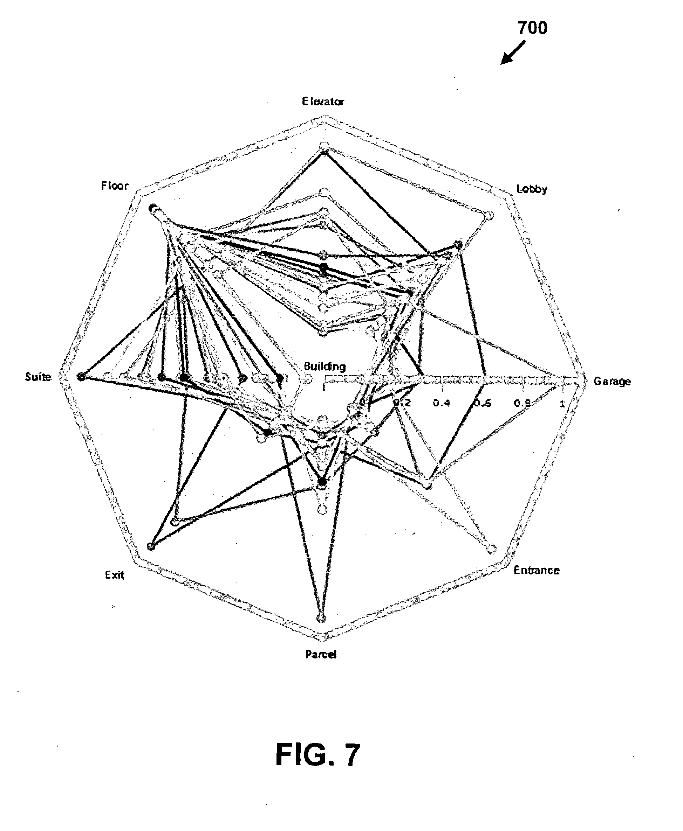

The reporting service 114 creates reports and notifications based on the statistics collected by the statistics service 112. The reports and notifications may include a combination of text and graphics. For example, a report may include a radar chart, such as the radar chart 700 depicted in Figure 7. The radar chart 700 depicts relationships with BUILDING as the base relationship type. The radar chart 700 shows a higher number of relationships created based on BUILDING-FLOOR than BUILDING-GARAGE relationship types. The reporting service 114 may create other types of charts, such as heat charts and gravity charts.

As another example, the reporting service 114 may generate a notification for a company that organizes public events. In this example, the company subscribes to receive email notifications whenever a BUILDING-CONFERENCE ROOM relationship is created between two location codes. The same company might also subscribe to receive notifications via HTTP POST or GET request, Web Service request, SMS or similar when more than 100,000 queries are issued for BUILDING-CONFERENCE ROOM relationship in particular area.

The reporting service 114 generates notifications when the relationship system 100 detects read or write access to relationship data during relationship creation, modification, deletion, or data extraction procedure. Users have multiple options to subscribe to notifications by specifying: a) notification delivery mechanism (email, Internet, SMS, etc.); b) event metadata (relationship type, location codes, relationship direction, etc.); c) event thresholds (amount of change, number of requests for data, geographical area, etc.).

The relationship system 100 communicates with the location system 116. The location system 116 may be part of a location content management system or a standalone entity. As described previously, the location system 116 assigns location codes to the originating and target identifiers.

The relationship system 100 also communicates with external users 118. For each external user, the relationship system 100 assigns an access permission that defines the user's level of participation. For example, the external users may have access to create, modify, and delete relationships; create, modify, and delete relationship hierarchies; obtain data from the relationship system 100; or any combination of these activities.

The relationship system 100 also communicates with third party systems 120.
The third party systems 120 are business entities that have an agreement to use the relationship system 100. Example third party systems include, but are not limited to, location content management systems, location based advertising systems, social networking platforms, real-time navigation systems, traffic and other location related monitoring systems. The third party systems 120 may establish a direct connection to the relationship system 100 in order to participate in relationship validation, publication, and/or other type of service. By being directly integrated into the relationship system 100, the third party systems 120 appear as integral components that participate in the overall process.

The agreements may allow the third party systems 120 to create relationships and obtain data from the relationship 100 in a similar manner as the external users 118. The agreements may also allow the third party systems 120 to access other services in the relationship system 100. For example, a third party system 120 may have an agreement that allows the third party system 120 to obtain reports from the reporting service 114.

To create a relationship, a user provides an originating identifier, a target identifier, and corresponding relationship types to the relationship system 100. The user may provide this information to the relationship system 100 via a user interface, a Web service, or other input mechanism. In response, the translation service 106 determines the language of the originating identifier, the target identifier, and the corresponding relationship types. In addition, the translation service 106 determines the Type ID 402 of the requested relationship. The synonym service 104 and the validation service 108 also evaluate the location codes and relationship types.

After validation, the relationship service 100 stores the new relationship in the relationship store 102. The graph service 110 uses the location code of the originating and target identifiers to determine whether the new relationship belongs to one or more relationship networks or hierarchies. The statistics service 112 includes the creation of this new relationship in its statistics regarding the number and type of created relationships. If requested by the external users 118 and/or the third party systems 120, the reporting service 114 may provide a notification and/or a report regarding any statistical update caused by the newly created relationship. A similar routine is used for modifying a relationship.

The relationship model is like a neurological set of connections that ties location codes into a traversal network. Conclusions about location usage, structure, and overall importance can be obtained by observing how relationships are created, used, and possibly destroyed. For example, two location codes can be involved in BUILDING-GARAGE relationship, which may later be changed to BUILDING-SHELTER.

Also, a user may use the relationship model to group, extract, and use multiple locations without dealing with the finer details of location structure. For example, a real-estate company might be interested in collecting information about all locations that have handicap access. Without going into details of location data structure and varying data structure, the real estate company can collect location codes by interacting with the relationship system only. Since the relationship system works with any existing or new location referencing system that provides unique location codes, the relationship system also provides a common way to organize and link locations.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A method of providing indoor navigation, comprising:
obtaining data associated with a first location identifier;
obtaining data associated with a second location identifier;
storing data associated with a relationship between the first location identifier and the second location identifier based on the obtained data;
identifying a relationship hierarchy that includes the relationship between the first and second location identifiers; and
using the hierarchy to provide navigation guidance within a building.

2. The method of claim 1, wherein the data associated with the first and second location identifiers includes a location code and a relationship type.

3. The method of claim 2, wherein the data associated with the first and second location identifiers further includes relationship direction.

4. The method of claim 3, wherein the relationship direction is one of unidirectional and bidirectional.

5. The method of claim 1, wherein storing data includes storing a location code and a relationship type for the first and second location identifiers.

6. The method of claim 1, further comprising graphing the relationship hierarchy as a vertical graph.

7. A system for collecting data regarding relationships between two location identifiers, comprising:
an input mechanism that allows a user to enter a first location code and a first relationship type associated with a first location identifier and a second location code and a second relationship type associated with a second location identifier;
a synonym service that determines whether the entered first and second relationship types are synonyms of a preferred relationship type;
a translation service that determines the language used for the first and second relationship types, wherein the translation service assigns a language code to the relationship types based on the determination;
a validation service that determines whether the entered first and second location codes and first and second relationship types form a valid relationship; and
a relationship store that stores the valid relationship for use by third party systems, wherein the valid relationship includes the preferred relationship type if one of the first and second relationship types is a synonym of the preferred relationship type.

8. The system of claim 7, wherein the input mechanism is one of a user interface and a Web service.

9. The system of claim 7, wherein a location system assigns the first and second location codes.

10. The system of claim 7, wherein the language code is stored with the stored valid relationship.

11. The system of claim 7, wherein the third party system is a navigation system.

12. The system of claim 7, wherein the third party system is a location content management system.

13. A computer program which, when executed by a computer, carries out a method according to any one of claims 1 to 6.
